# EUROPÄISCHE PATENTSCHRIFT

(11) **EP 1 984 993 B1**
(45) Veröffentlichungstag und Bekanntmachung des Hinweises auf die Patenterteilung: **28.08.2013**
(21) Anmeldenummer: 07701286.2
(22) Anmeldetag: 30.01.2007
(51) Int. Cl.: H01T 13/54, H01T 13/46

(54) **ZÜNDKERZE**
SPARKPLUG
BOUGIE D' ALLUMAGE

(30) Priorität: 17.02.2006 AT 2542006
(43) Veröffentlichungstag der Anmeldung: 29.10.2008
(73) Patentinhaber: GE Jenbacher GmbH & Co OHG, 6200 Jenbach (AT)
(72) Erfinder: FRANCESCONI, Christian, A-8605 Kapfenberg (AT); EGGER, Christoph, A-6200 Jenbach (AT); KLAUSNER, Johann, A-6391 St. Jakob i.H. (AT)
(74) Vertreter: Torggler, Paul Norbert
(86) Internationale Anmeldenummer: PCT/AT2007/000040
(87) Internationale Veröffentlichungsnummer: WO 2007/092972

(56) Entgegenhaltungen:
- EP-A1- 0 069 993
- EP-A1- 0 322 839
- DE-A1- 2 549 892
- DE-A1- 3 206 708
- DE-A1- 3 436 628
- DE-A1- 10 326 269
- DE-U1- 8 808 250

## Beschreibung

Die vorliegende Erfindung betrifft eine Zündkerze für Brennkraftmaschinen, insbesondere mit magerer Betriebsweise, mit einer eine Vorkammer umgebenden im Wesentlichen geschlossenen Vorkammerwandung mit Übertrittsöffnungen, wobei zumindest zwei Übertrittsöffnungen so ausgebildet und angeordnet sind, dass sich in der Vorkammer entzündeter Brennstoff nach dem Verlassen der Vorkammer durch die Übertrittsöffnungen in Form von im Wesentlichen parallel verlaufenden oder zueinander konvergierend verlaufenden Zündfackeln ausbreitet. Eine Zündkerze, gemäß Oberbegriff des Anspruchs 1 ist aus DE 3436628 A1 bekannt.

Bei der seit einiger Zeit andauernden Entwicklung hin zum Magerbetrieb von Brennkraftmaschinen wird es immer schwieriger, die brennstoffarmen mageren Gemische in der Brennkammer des Zylinders zu entzünden. Konventionelle Zündkerzen mit Hakenelektroden sind dazu nicht mehr geeignet. Beim Stand der Technik ist es bereits bekannt, so genannte Vorkammerzündkerzen zu verwenden, bei denen Brennstoff-Luft-Gemisch in der Vorkammer zunächst mittels Zündfunken gezündet wird. Der entzündete Brennstoff tritt dann in Form von Zündfackeln aus den Übertrittsöffnungen in der Vorkammerwandung in die Brennkammer der Brennkraftmaschine aus, um dort das magere Brennstoff-Luft-Gemisch zu entzünden. Beim Stand der Technik wird davon ausgegangen, dass die so erzeugten Zündfackeln so ausgerichtet werden müssen, dass sie möglichst weit auseinander laufen, also in ihrer Ausbreitungsrichtung in der Brennkammer der Brennkraftmaschine divergieren. Es wurde nun aber erkannt, dass diese Art der Ausrichtung der Zündfackeln nicht zum gewünschten Erfolg, nämlich einer möglichst raschen und vollständigen Verbrennung des Brennstoff-Luft-Gemisches in der Brennkammer führt.

Aufgabe der Erfindung ist es, eine diesbezüglich verbesserte gattungsgemäß Zündkerze und eine entsprechende Vorkammer zu schaffen.

Dies wird erfindungsgemäß erreicht, indem die Zündkerze zumindest einen Mittelelektrodenträger mit zumindest einer, vorzugsweise flächigen, Mittelelektrode und zumindest einen Masseelektrodenträger mit zumindest einer, vorzugsweise flächigen, Masseelektrode aufweist, wobei die Mittelelektrode und die Masseelektrode in einer Richtung quer zur Längserstreckung der Zündkerze voneinander beabstandet angeordnet sind, wobei zwischen Mittelelektrode und Masseelektrode jeweils eine, vorzugsweise im Wesentlichen im Zentrum der Vorkammer angeordnete, Zündfunkenstrecke verläuft, wobei die Zündfunkenstrecke(n) zwischen Mittelelektrode(n) und Masseelektrode(n), vorzugsweise in einer Draufsicht aus Richtung einer Brennkammer, gegenüber den, vorzugsweise allen, Übertrittsöffnungen versetzt angeordnet ist (sind).

Die Erfindung geht somit im Gegensatz zum Stand der Technik von der Kenntnis aus, dass eine Konzentration der Zündfackeln in einem Teilvolumen der Brennkammer der Brennkraftmaschine zu einer deutlich rascheren und vollständigeren Entzündung und Verbrennung des Brennstoff-Luft-Gemisches in der Brennkammer führt. Diese räumliche Konzentration der Zündfackeln wird erfindungsgemäß erreicht, indem über geeignete Anordnungen und Ausformungen der Übertrittsöffnungen in der Vorkammerwandung dafür gesorgt wird, dass die Zündfackeln sich im Wesentlichen parallel oder aufeinander zulaufend, also konvergierend, ausbreiten. Hierdurch ist es möglich, mit geringeren Brenndauern und Zündspannungen eine schnelle und vollständige Verbrennung des Brennstoff-Luft-Gemisches zu erreichen. Durch die geringeren Brenndauern und Zündspannungen wird zusätzlich aber auch die Haltbarkeit der Zündkerze erhöht, da es zB nicht so stark zu Elektrödenkorrosion kommt.

Günstigerweise ist vorgesehen, dass die Übertrittsöffnungen jeweils Hauptachsen, vorzugsweise Symmetrieachsen, aufweisen, wobei die Übertrittsöffnungen so angeordnet sind, dass die Hauptachsen außerhalb der Vorkammer parallel oder zueinander konvergierend angeordnet sind.

Die Hauptachsen der Übertrittsöffnungen sind bei symmetrischen, wie zB zylinderförmigen oder kegel- bzw, kegelstumpfförmigen, Übertrittsöffnungen die Symmetrieachsen. Bei Ausführungsformen der Übertrittsöffnungen mit parallelen Wänden verlaufen die Hauptachsen parallel zu den Wänden der Übertrittsöffnungen in deren Mitte. Generell verlaufen die Hauptachsen aber in der Hauptausbreitungsrichtung der durch die Übertrittsöffnung hindurchtretenden Zündfackel.

In einer ersten Ausführungsform der Erfindung ist es vorgesehen, dass die Vorkammerwandung fixer Bestandteil der Zündkerze ist. Dies wird erreicht, indem die Vorkammerwandung mit dem Rest der Zündkerze, zum Beispiel durch Verschweißen, fix verbunden bzw. einstückig ausgebildet ist. Atternativ kann es aber auch vorgesehen sein, dass die Vorkammerwandung zumindest zum Teil, vorzugsweise vollständig, gegebenenfalls samt Masseelektrodenträger, am Rest der Zündkerze lösbar befestigt ist. Zur lösbaren Befestigung können zB Schraubverbindungen zwischen Vorkammerwandung und dem Rest der Zündkerze bzw. einer Standardzündkerze vorgesehen sein. Bei dieser Gruppe von Ausgestaltungsformen betrifft die Erfindung dann auch die mit entsprechenden Übertrittsöffnungen versehene Vorkammerwandung an sich.

Weitere Einzelheiten und Merkmale der Erfindung ergeben sich aus der Beschreibung des in den Fig. dargestellten erfindungsgemäßen Ausführungsbeispiels einer Zündkerze.

Dabei zeigen:
- Fig. 1: eine Seitenansicht auf die gesamte Zündkerze,
- Fig. 2 und 3: Längsschnitte im Wesentlichen konzentriert auf den erfindungswesentlichen Teil der Zündkerze,
- Fig. 4: eine brennkammerseitige Draufsicht auf die Deckelfläche der Vorkammer,
- Fig. 5 und 6: zwei verschiedene Elektrodenkonfigurationen in einer brennkammerseitigen Draufsicht mit abgenommener Deckelfläche der Vorkammer, und
- Fig. 7 und 8: räumliche Darstellungen von zwei verschiedenen Ausführungsformen des zylinderförmigen Teils der Vorkammerwandung.

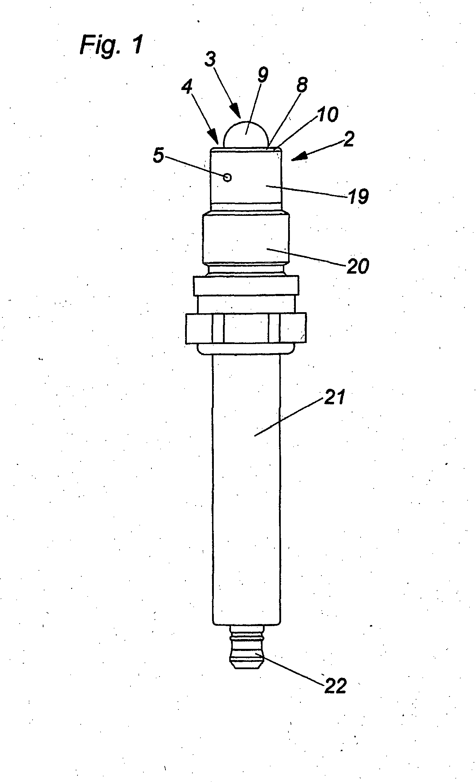

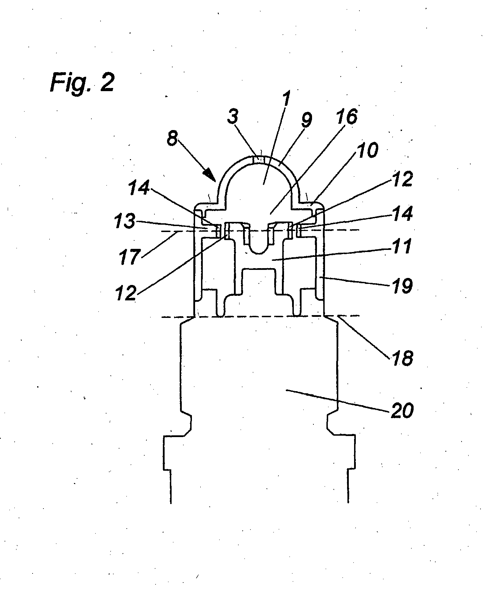

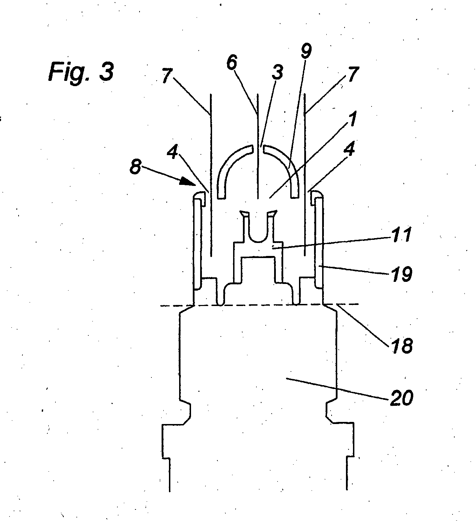

In den Fig. 1 bis 3 sind die erfindungsunwesentlichen Teile wie Mittelelektrodenanschluss 22, Isolatorkörper 21 und Zündkerzengehäuse 20 nur sehr schematisch dargestellt. Sie können in den beim Stand der Technik bekannten Ausführungsformen realisiert sein. Das Gleiche gilt für die in Fig. 2 und 3 nicht explizit dargestellte Hindurchführung der Mittelelektrode durch Isolatorkörper und Zündkerzengehäuse.

Erfindungswesentlich ist die Ausgestaltung der Vorkammerwandung 2. Diese weist im gezeigten Ausführungsbeispiel einen zylinderförmigen Teil 19 und darauf brennkammerseitig aufgesetzt eine Deckelfläche 8 auf. Die Deckelfläche 8 ist günstigerweise, wie im Schnitt in Fig. 2 und 3 zu sehen, als eigener Bauteil ausgeführt. Sie kann auf dem zylinderförmigen Teil zB durch Verschweißen, insbesondere Laserschweißen, fixiert werden. Durch die getrennte Ausführung von Deckelfläche 8 und zylinderförmigem Teil 19 besteht die Möglichkeit, bei abgenommener Deckelfläche 8 den Elektrodenabstand einstellen zu können.

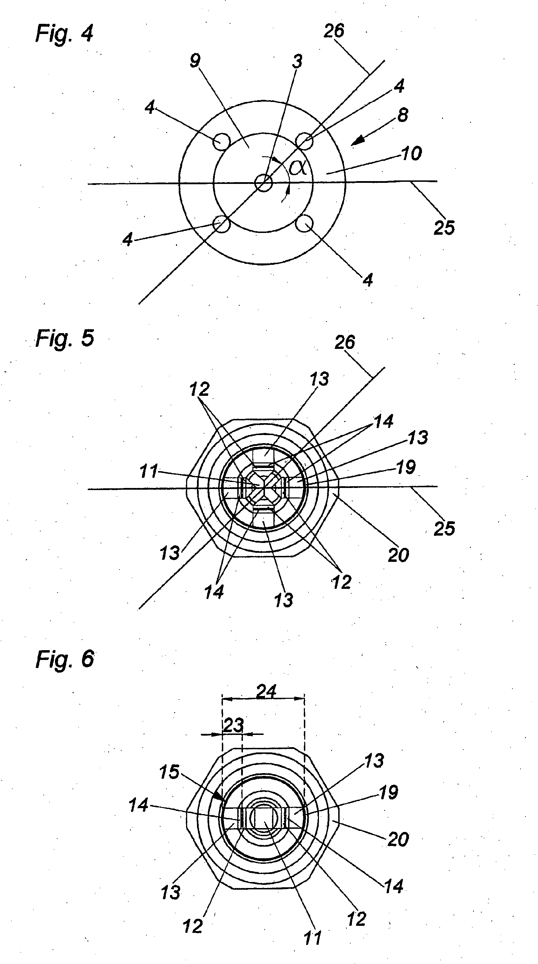

Die in der zylinderförmigen Wandung 19 angeordneten Spülbohrungen 5 sind optional und dienen - falls vorhanden - im Wesentlichen dem raschen Eindringen des Brennstoff-LuftGemisches in die Vorkammer 1. Die Spülbohrungen 5, sind falls, vorhanden, im vom brennkammerseitigen Ende der Vorkammerwandung 2 am weitesten entfernten Drittel angeordnet. Die Übertrittsöffnungen 3, 4, durch die die Zündfackeln in die hier nicht dargestellte Brennkammer der Brennkraftmaschine übertreten, sind günstigerweise in der zur Brennkammer weisenden Deckelfläche 8 der Vorkammerwandung 2 angeordnet. Die Übertrittsöffnungen 3 und 4 können in Form von zylinderförmigen Bohrungen in der Vorkammerwandung 2 ausgeführt sein. Es ist aber auch möglich, kegelstumpf-, ellipsen-oder schlitzförmige Übertrittsöffnungen 3, 4 vorzusehen. Die Deckelfläche 8 der Vorkammerwandung 2 weist eine in Richtung der Brennkammer der Brennkraftmaschine vorstehende Ausbauchung 9 auf. Diese ist zumindest bereichsweise kugelförmig oder kugelähnlich in diesem Ausführungsbeispiel ausgeführt. In der Ausbauchung 9 ist wiederum eine zentrale Übertrittsöffnung 3 vorgesehen, sodass durch die Ausbauchung 9 eine Düsenwirkung erzielt werden kann. Die Ausbauchung 9 ist ringförmig von einem abgeflachten bzw. ebenen Bereich 10 umgeben, der ebenfalls einen Teil der Deckelfläche 8 bildet. Im gezeigten Ausführungsbeispiel sind vier zusätzliche Übertrittsöffnungen 4 im ringförmig die Ausbauchung 9 umgebenden Bereich 10, und damit randlich bezüglich der zentral angeordneten Übertrittsöffnung 3 angeordnet. Die Hauptachsen 6 und 7 der Übertrittsöffnungen 3 und 4 verlaufen in diesem Ausführungsbeispiel im Wesentlichen parallel, wie dies der Längsschnitt gemäß Fig. 3 zeigt. Die Lage der Schnittebenen von Fig. 2 und 3 ist in den brennkammerseitigen Draufsichten gemäß Fig. 4 und 5 zu erkennen. Fig. 2 zeigt den Längsschnitt entlang der Geraden 25. Fig. 3 zeigt den Längsschnitt durch die Übertrittsöffnungen 3 und 4 entlang der Geraden 26.

Günstigerweise ist es vorgesehen, die erfindungsgemäße Zündkerze so in den Zylinder der Brennkraftmaschine einzubauen, dass die Übertrittsöffnungen 3 und 4 möglichst nahe an der Zylinder- bzw. Brennkammerwandung der Brennkraftmaschine angeordnet sind.

In den brennkammerseitigen Draufsichten gemäß den Fig. 5 und 6 sind bevorzugte Elektrodenanordnungen gezeigt. In der Variante gemäß Fig. 5 stehen vier Mitteletektroden 12 vier Masseelektroden 14 gegenüber, während in Fig. 6 zwei Mittelelektroden 12 zwei Masseelektroden 14 gegenüber stehen. Die Mittelelektroden 12 sind auf einen gemeinsamen Mittelelektrodenträger 11, vorzugsweise zur Optimierung der Zündstrecke verstellbar, angeordnet.. Die Masseelektroden 14 sitzen auf einem oder mehreren Masseelektrodenträger(n) 13, der (die) einstückig bzw. integriert in den zylinderförmigen Teil 19 der Vorkammerwandung 2 ausgeführt sein kann (können). Die Vorkammerwandung 2 umschließt die Mittelelektrodenanordnung 11, 12 und die Masseelektrodenanordnung 13, 14 vollständig. Um eine möglichst zentrale Zündung in der Vorkammer 1 zu erreichen, ist günstigerweise vorgesehen, dass die Masseelektroden 14 innerhalb der Vorkammer 1 von der inneren Oberfläche 15 der Vorkammerwandung 2 beabstandet angeordnet sind. Günstig ist es hierbei wiederum, wenn jeweils der Abstand 23 der Mitte der zur Mittelelektrode 12 weisenden Oberfläche der Masseelektrode 14 von der inneren Oberfläche 15 der Vorkammerwandung 2 mindestens 15 %, vorzugsweise mindestens 20 % des Innendurchmessers 24 der Vorkammer 1, beträgt. Wie in Fig 2 und 3 dargestellt, sind die Elektroden 12 und 14 im zur Brennkammer der Brennkraftmaschine weisenden Drittel des zylinderförmigen Teils 19 der Vorkammer 2 angeordnet. Im Sinne einer möglichst mittigen Zündung in der Vorkammer 1 ist günstigerweise darüber hinaus vorgesehen, dass das Teilvolumen 16 der Vorkammer 1 auf der zu einer Brennkammer weisenden Seite der in einem Längsschnitt durch die Vorkammer 1 gesehenen Mitte 17 der Zündstrecke zwischen Mittelelektrode 12 und Masseelektrode 14 zwischen 30 % und 55 %, vorzugsweise zwischen 35 % und 45 %, des Gesamtvolumens der Vorkammer beträgt. Die Mitte 17 der Zündstrecke, und damit die Trennebene zwischen dem zur Brennkammer weisenden Teilvolumen 16 und dem von der Brennkammer weg weisenden Teilvolumen der Vorkammer 1, ist in den Fig. 2 und 3 dargestellt. In absoluten Zahlen beträgt das Teilvolumen 16 der Vorkammer 1 bevorzugt zwischen 0,36 cm³ und 0,66 cm³, vorzugsweise zwischen 0,42 cm³ und 0,54 cm³, im hier gezeigten Ausführungsbeispiel ca. 0,48 cm³. Das auf der entgegen gesetzten Seite der Mitte 17 angeordnete Teilvolumen der Vorkammer 1 beträgt bevorzugt zwischen 0,53 cm³ und 0,83 cm³, vorzugsweise zwischen 0,66 cm³ und 0,78 cm³, im hier gezeigten Ausführungsbeispiel ca. 0,71 cm³. Das Innenvolumen der Ausbauchung 9 beträgt günstigerweise von 0,13 cm³ bis 0,2 cm³, hier ca. 0,167 cm³. Die Übertrittsöffnungen 3 und 4 weisen einen Durchmesser zwischen 0,5 mm und 2 mm, vorzugsweise im Bereich von ca. 1,5 mm, auf. Der Innendurchmesser 24 des zylinderförmigen Teils 19 der Vorkammerwandung 2 beträgt zB ca. 13 mm. Der Abstand 23 zwischen der zur Mittelelektrode 12 weisenden Oberfläche der Masseelektrode 14 und der inneren Oberfläche 15 der Vorkammerwandung 2 liegt günstigerweise zwischen 2 mm und 3,1 mm, bevorzugt bei 2,6 mm. Sowohl Masse- als auch Mittelelektroden 12 und 14 sind flächig in Form von Rechtecken oder Quadraten im konkreten Ausführungsbeispiel ausgeführt. Sie weisen eine Kantenlänge im Bereich zwischen 1,5 mm und 3,5 mm und eine Dicke von ca. 0,5 mm auf. Aus den obigen Angaben ergibt sich ein bevorzugtes Gesamtvorkammervolumen von ca. 1,2 cm³.

Generell ist im Sinne einer im Wesentlichen geschlossenen Vorkammerwandung 2 bevorzugt vorgesehen, dass die Gesamtfläche der Übertrittsöffnungen 3, 4' maximal 10 %, vorzugsweise maximal 5 %, der geschlossenen äußeren Oberfläche der Vorkammerwandung 2 gerechnet ab einer von der Brennkammerseite der Vorkammer gesehen am weitesten entfernten Erstreckungsgrenze 18 der Vorkammer 1, beträgt. Es kann sogar vorgesehen sein, dass die Gesamtfläche der Übertrittsöffnungen 3, 4' maximal weniger als 3 % oder weniger als 2 % der geschlossenen äußeren Oberfläche der Vorkammerwandung 2 gerechnet ab einer von der Brennkammerseite der Vorkammer gesehen am weitesten entfernten Erstreckungsgrenze 18 der Vorkammer 1, beträgt.

Wie aus dem Vergleich der Fig. 4 mit den Fig. 5 und 6 hervorgeht, sind die Zündfunkenstrecken zwischen den Mittetetektroden 12 und Masseelektroden 14 in einer Draufsicht aus Richtung der Brennkammer der Brennkraftmaschinen gegenüber den Übertrittsöffnungen 3 und 4 versetzt angeordnet. Dies ist am Winkel α zwischen den Linien 25 und 26 zu erkennen. Im konkreten Ausführungsbeispiel beträgt der Winkel α 45°. Dieser Versatz zwischen Übertrittsöffnungen 3 und 4 und den Elektroden 12 und 14 trägt dazu bei, dass das Brennstoff-Luft-Gemisch in der Vorkammer 1 zunächst vollständig gezündet wird, bevor die Zündfackeln aus den Übertrittsöffnungen 3 und 4 in die Brennkammer austreten.

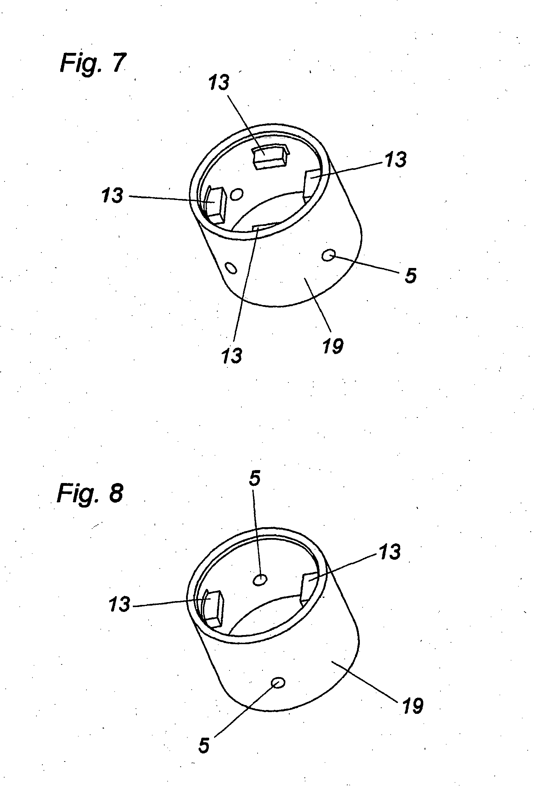

In den Fig. 7 und 8 sind die zylinderförmigen Teile 19 der Vorkammerwandung 2 noch einmal separat in perspektivischen Darstellungen gezeigt. Fig. 7 zeigt die Variante mit vier Masseelektroden gemäß Fig. 5. Fig. 8 zeigt die Ausführungsform mit zwei Masseelektroden gemäß Fig. 6. Die Masseelektrodenträger 13 können an der zylinderförmigen Wandung 19 angeschweißt oder einstückig in diese integriert oder anderweitig an dieser angebracht sein. Die Vorkammerbauteile sollten generell aus temperatur- und heißkorrossionsbeständigen Werkstoffen bestehen. Für den zylinderförmigen Teil kann zB eine Nickelbasislegierung verwendet werden. Günstige Werkstoffe für die Deckelfläche 8 sind zB Molybdän; Tantal, Niob, Wolfram, Titanzirkonmolybdänlegierungen und dergleichen. Die Wandstärken von Vorkammerzylinder 19 und Deckelfläche 8 sollten zwischen 0,5 und 2 mm, vorzugsweise ca. 1 mm, betragen. Die einzelnen Teile der Vorkammerwandung wie auch die Massenelektrodenträger 13, der Mittelelektrodenträger 11 und die Mittelelektroden 12 und Masseelektroden 14 werden vorzugsweise durch Verschweißen, insbesondere Laserschweißen, an den jeweils korrespondierenden Bauteilen befestigt.

## Patentansprüche

1. Zündkerze für Brennkraftmaschinen, insbesondere mit magerer Betriebsweise mit einer eine Vorkammer (1) umgebenden im Wesentlichen geschlossenen Vorkammerwandung (2) mit Übertrittsöffnungen (3, 4), wobei zumindest zwei Übertrittsöffnungen (3, 4) so ausgebildet und angeordnet sind, dass sich in der Vorkammer (1) entzündeter Brennstoff nach dem Verlassen der Vorkammer (1) durch die Übertrittsöffnungen (3, 4) in Form von im Wesentlichen parallel verlaufenden oder zueinander konvergierend verlaufenden Zündfackeln ausbreitet, **dadurch gekennzeichnet, dass** die Zündkerze zumindest einen Mittelelektrodenträger (11) mit zumindest einer, vorzugsweise flächigen, Mittelelektrode (12) und zumindest einen Masseelektrodenträger (13) mit zumindest einer, vorzugsweise flächigen, Masseelektrode (14) aufweist, wobei die Mittelelektrode (12) und die Masseelektrode (14) in einer Richtung quer zur Längserstreckung der Zündkerze voneinander beabstandet angeordnet sind, wobei zwischen Mittelelektrode (12) und Masseelektrode (14) jeweils eine, vorzugsweise im Wesentlichen im Zentrum der Vorkammer (1) angeordnete, Zündfunkenstrecke verläuft, wobei die Zündfunkenstrecke(n) zwischen Mittelelektrode(n) (12) und Masseelektrode(n) (14), vorzugsweise in einer Draufsicht aus Richtung einer Brennkammer, gegenüber den, vorzugsweise allen, Übertrittsöffnungen (3, 4) versetzt angeordnet ist (sind).

2. Zündkerze nach Anspruch 1, **dadurch gekennzeichnet, dass** die Übertritisöffnungen (3, 4) jeweils Hauptachsen (6, 7), vorzugsweise Symmetrieachsen, aufweisen, wobei die Übertrittsöffnungen (3, 4) so angeordnet sind, dass die Hauptachsen (6, 7) außerhalb der Vorkammer (1) parallel oder zueinander konvergierend angeordnet sind.

3. Zündkerze nach Anspruch 1 oder 2, **dadurch gekennzeichnet, dass** die Übertrittsöffnungen (3, 4) zumindest zum Teil in Form von Bohrungen in der Vorkammerwandung (2) ausgeführt sind.

4. Zündkerze nach einem der Ansprüche 1 bis 3, **dadurch gekennzeichnet, dass** zumindest zwei der Übertrittsöffnungen (3, 4) in einer in Einbaustellung der Zündkerze zu einer Brennkammer der Brennkraftmaschine weisenden Deckelfläche (8) der Vorkammerwandung (2) angeordnet sind.

5. Zündkerze nach Anspruch 4, **dadurch gekennzeichnet, dass** die Deckelfläche (8) eine zentrale, in Einbaustellung in Richtung der Brennkammer vorstehende Ausbauchung (9) aufweist.

6. Zündkerze nach Anspruch 5, **dadurch gekennzeichnet, dass** die Ausbauchung (9) so ausgeformt ist, dass sie eine Düsenwirkung erzielt.

7. Zündkerze nach Anspruch 5 oder 6, **dadurch gekennzeichnet, dass** die Ausbauchung (9) zumindest bereichsweise kugelförmig oder kugelähnlich ausgebildet ist.

8. Zündkerze nach einem der Ansprüche 5 bis 7, **dadurch gekennzeichnet, dass** die Deckelfläche (8) einen die Ausbauchung (9) ringförmig umgebenden, vorzugsweise ebenen oder abgeflachten, Bereich (10) aufweist.

9. Zündkerze nach einem der Ansprüche 4 bis 8, **dadurch gekennzeichnet, dass** eine der Übertrittsöffnungen (3) zentral in der Deckelfläche (8) bzw. soweit vorhanden in der Ausbauchung (9) angeordnet ist.

10. Zündkerze nach Anspruch 9, **dadurch gekennzeichnet, dass** zumindest eine, vorzugsweise vier, zusätzliche Übertrittsöffnungen (4) in der Deckelfläche (8) randlich bezüglich der zentral angeordneten Übertrittsöffnung (3) angeordnet sind.

11. Zündkerze nach Anspruch 8 und 10, **dadurch gekennzeichnet, dass** die zusätzlichen Übertrittsöffnungen (4) im ringförmig die zentrale Übertrittsöffnung (3) umgebenden Bereich angeordnet sind.

12. Zündkerze nach einem der Ansprüche 1 bis 11, **dadurch gekennzeichnet, dass** die Vorkammerwandung (2) die Mittelelektrode (12) und die Masseelektrode (14), vorzugsweise vollständig, umschließt.

13. Zündkerze nach einem der Ansprüche 1 bis 12, **dadurch gekennzeichnet, dass** am Mittelelektrodenträger (11) mindestens zwei, vorzugsweise drei oder vier, in Richtung Vorkammerwandung (2) weisende Mittelelektroden (12) und am Masseelektrodenträger (13) eine entsprechende Anzahl von den Mittelelektroden (12) jeweils gegenüberstehenden Masseelektroden (14) angeordnet sind.

14. Zündkerze nach einem der Ansprüche 1 bis 13, **dadurch gekennzeichnet, dass** die Masseelektroden (14) innerhalb der Vorkammer (1) von der inneren Oberfläche (15) der Vorkammerwandung (2) beabstandet angeordnet sind.

15. Zündkerze nach Anspruch 14, **dadurch gekennzeichnet, dass** der Abstand (23) der Mitte der zur Mittelelektrode (12) weisenden Oberfläche der Masseelektrode (14) von der inneren Oberfläche (15) der Vorkammerwandung (2) mindestens 15 %, vorzugsweise mindestens 20 % des Innendurchmessers (24) der Vorkammer (1), beträgt.

16. Zündkerze nach einem der Ansprüche 1 bis 15, **dadurch gekennzeichnet, dass** ein Teilvolumen (16) der Vorkammer (1) auf der zu einer Brennkammer weisenden Seite der in einem Längsschnitt durch die Vorkammer gesehenen Mitte (17) der Zündstrecke zwischen Mittelelektrode (12) und Masseelektrode (14) zwischen 30 % und 55 %, vorzugsweise zwischen 35 % und 45 %, des Gesamtvolumens der Vorkammer (1) beträgt.

17. Zündkerze nach einem der Ansprüche 1 bis 16, **dadurch gekennzeichnet, dass** die Gesamtfläche der Übertrittsöffnungen (3, 4) maximal 10 %, vorzugsweise maximal 5 %, der geschlossenen äußeren Oberfläche der Vorkammerwandung (2) gerechnet ab einer von der Brennkammerseite der Vorkammer (1) gesehen am weitesten entfernten Erstreckungsgrenze (18) der Vorkammer (1), beträgt.

18. Zündkerze nach einem der Ansprüche 1 bis 17, **dadurch gekennzeichnet, dass** die Vorkammerwandung (2) mit dem Rest der Zündkerze, zum Beispiel durch Verschweißen, fix verbunden bzw. einstückig ausgebildet ist.

19. Zündkerze nach einem der Ansprüche 1 bis 18, **dadurch gekennzeichnet, dass** die Vorkammerwandung (2) zumindest zum Teil, vorzugsweise vollständig, gegebenenfalls samt Masseelektrodenträger (13), am Rest der Zündkerze lösbar befestigt ist.

## Claims

1. A spark plug for internal combustion engines, in particular with a lean mode of operation, comprising a substantially closed pre-chamber wall (2) which surrounds a pre-chamber (1) and has transfer openings (3, 4), wherein at least two transfer openings (3, 4) are of such a configuration and arrangement that fuel fired in the pre-chamber (1) is propagated after leaving the pre-chamber (1) through the transfer openings (3, 4) in the form of ignition flares which extend substantially parallel or in mutually converging relationship, **characterised in that** the spark plug has at least one central electrode carrier (11) with at least one preferably areal central electrode (12) and at least one ground electrode carrier (13) with at least one preferably areal ground electrode (14), wherein the central electrode (12) and the ground electrode (14) are arranged spaced from each other in a direction transverse relative to the longitudinal extent of the spark plug, wherein extending between the central electrode (12) and the ground electrode (14) is a respective ignition spark path arranged preferably substantially at the centre of the pre-chamber (1), wherein the ignition spark path or paths between the central electrode or electrodes (12) and the ground electrode or electrodes (14) is or are arranged displaced preferably in a plan view from the direction of a combustion chamber with respect to the and preferably all transfer openings (3, 4).

2. A spark plug according to claim 1 **characterised in that** the transfer openings (3, 4) respectively have main axes (6, 7), preferably axes of symmetry, wherein the transfer openings (3, 4) are so arranged that the main axes (6, 7) are arranged outside the pre-chamber (1) parallel or in mutually convergent relationship.

3. A spark plug according to claim 1 or claim 2 **characterised in that** the transfer openings (3, 4) are at least in part in the form of bores in the pre-chamber wall (2).

4. A spark plug according to one of claims 1 to 3 **characterised in that** at least two of the transfer openings (3, 4) are arranged in a top surface (8) of the pre-chamber wall (2), that in the position of installation of the spark plug faces towards a combustion chamber of the internal combustion engine.

5. A spark plug according to claim 4 **characterised in that** the top surface (8) has a central convex portion (9) which in the position of installation projects in the direction of the combustion chamber.

6. A spark plug according to claim 5 **characterised in that** the convex portion (9) is so shaped that it achieves a nozzle action.

7. A spark plug according to claim 5 or claim 6 **characterised in that** the convex portion (9) is at least region-wise of a ball-shaped configuration or a ball-like configuration.

8. A spark plug according to one of claims 5 to 7 **characterised in that** the top surface (8) has a region (10) which surrounds the convex portion (9) in a ring configuration and which is preferably flat or flattened off.

9. A spark plug according to one of claims 4 to 8 **characterised in that** one of the transfer openings (3) is arranged centrally in the top surface (8) or if present in the convex portion (9).

10. A spark plug according to claim 9 **characterised in that** at least one and preferably four additional transfer openings (4) are arranged in the top surface (8) in edge relationship with respect to the centrally arranged transfer opening (3).

11. A spark plug according to claim 8 and claim 10 **characterised in that** the additional transfer openings (4) are arranged in the region surrounding the central transfer opening (3) in a ring shape.

12. A spark plug according to one of claims 1 to 11 **characterised in that** the pre-chamber wall (2) preferably completely encloses the central electrode (12) and the ground electrode (14).

13. A spark plug according to one of claims 1 to 12 **characterised in that** arranged on the central electrode carrier (11) are at least two and preferably three or four central electrodes (12) facing in the direction of the pre-chamber wall (2) and arranged on the ground electrode carrier (13) are a corresponding number of ground electrodes (14) respectively opposite the central electrodes (12).

14. A spark plug according to one of claims 1 to 13 **characterised in that** the ground electrodes (14) are arranged within the pre-chamber (1) spaced from the inside surface (15) of the pre-chamber wall (2).

15. A spark plug according to claim 14 **characterised in that** the spacing (23) of the centre of the surface, facing towards the central electrode (12), of the ground electrode (14) from the inside surface (15) of the pre-chamber wall (2) is at least 15% and preferably at least 20% of the inside diameter (24) of the pre-chamber (1).

16. A spark plug according to one of claims 1 to 15 **characterised in that** a partial volume (16) of the pre-chamber (1) on the side, facing towards the combustion chamber, of the centre (17), viewed in a longitudinal section through the pre-chamber, of the ignition path between the central electrode (12) and the ground electrode (14) is between 30% and 55%, preferably between 35% and 45%, of the total volume of the pre-chamber (1).

17. A spark plug according to one of claims 1 to 16 **characterised in that** the total area of the transfer openings (3, 4) is at a maximum 10% and preferably at a maximum 5% of the closed outside surface of the pre-chamber wall (2) calculated from an extension limit (18) of the pre-chamber (1), that is most remote as viewed from the combustion chamber side of the pre-chamber (1).

18. A spark plug according to one of claims 1 to 17 **characterised in that** the pre-chamber wall (2) is fixedly connected to or formed in one piece with the rest of the spark plug, for example by welding.

19. A spark plug according to one of claims 1 to 18 **characterised in that** the pre-chamber wall (2) is at least in part and preferably completely releasably fixed, possibly together with the ground electrode carrier (13), to the rest of the spark plug.

## Revendications

1. Bougie d'allumage pour moteurs à combustion interne, notamment à fonctionnement avec mélange appauvri, comprenant une paroi de préchambre (2) sensiblement fermée, entourant une préchambre (1) et munie d'ouvertures de débordement (3, 4), au moins deux ouvertures de débordement (3, 4) étant configurées et disposées de sorte que le combustible qui s'allume dans la préchambre (1) se propage après avoir quitté la préchambre (1) par les ouvertures de débordement (3, 4) sous la forme de torches d'allumage qui s'étendent sensiblement en parallèle ou qui convergent les unes vers les autres, **caractérisée en ce que** la bougie d'allumage comprend au moins un support d'électrode central (11) pourvu d'au moins une électrode centrale (12), de préférence plate, et au moins un support d'électrode de masse (13) pourvu d'au moins une électrode de masse (14), de préférence plate, l'électrode centrale (12) et l'électrode de masse (14) étant espacées l'une de l'autre dans une direction transversale à la direction longitudinale de la bougie d'allumage, respectivement un parcours d'étincelle d'allumage, disposé de préférence sensiblement au centre de la préchambre (1), s'étendant entre l'électrode centrale (12) et l'électrode de masse (14), le ou les parcours d'étincelle d'allumage entre l'électrode ou les électrodes centrales (12) et l'électrode ou les électrodes de masse (14), de préférence dans une vue du dessus partant de la direction d'une préchambre étant décalés par rapport aux ouvertures de débordement (3, 4), de préférence à toutes celles-ci.

2. Bougie d'allumage selon la revendication 1, **caractérisée en ce que** les ouvertures de débordement (3, 4) présentent respectivement des axes principaux (6, 7), de préférence des axes de symétrie, les ouvertures de débordement (3, 4) étant disposées de sorte que les axes principaux (6, 7) à l'extérieur de la préchambre (1) sont parallèles ou convergents l'un vers l'autre.

3. Bougie d'allumage selon la revendication 1 ou la revendication 2, **caractérisée en ce que** les ouvertures de débordement (3, 4) sont configurées au moins en partie sous forme de trous dans la paroi (2) de la préchambre.

4. Bougie d'allumage selon l'une quelconque des revendications 1 à 3, **caractérisée en ce qu'**au moins deux des ouvertures de débordement (3, 4) sont disposées dans une surface de couvercle (8) de la paroi (2) de la préchambre, ladite surface étant orientée vers une chambre de combustion du moteur à combustion interne lorsque la bougie d'allumage se trouve dans sa position installée.

5. Bougie d'allumage selon la revendication 4, **caractérisée en ce que** la surface de couvercle (8) présente un renflement (9) faisant saillie en direction de la chambre de combustion lorsque la bougie se trouve dans sa position installée.

6. Bougie d'allumage selon la revendication 5, **caractérisée en ce que** le renflement (9) est façonné de manière à obtenir un effet d'injection.

7. Bougie d'allumage selon la revendication 5 ou 6, **caractérisée en ce que** le bombement (9) présente une forme de sphère ou une forme similaire au moins par endroits.

8. Bougie d'allumage selon l'une quelconque des revendications 5 à 7, **caractérisée en ce que** la surface de couvercle (8) présente une zone (10) entourant le renflement (9) de façon annulaire, de préférence plate ou aplatie.

9. Bougie d'allumage selon l'une quelconque des revendications 4 à 8, **caractérisée en ce qu'**une des ouvertures de débordement (3) est ménagée au centre de la surface de couvercle (8) ou, le cas échéant, dans le renflement (9).

10. Bougie d'allumage selon la revendication 9, **caractérisée en ce qu'**au moins une, de préférence quatre, ouverture(s) de débordement (4) supplémentaires sont ménagée(s) dans la surface de couvercle (8) au niveau des bords par rapport à l'ouverture de débordement (3) aménagée au centre.

11. Bougie d'allumage selon les revendications 8 et 10, **caractérisée en ce que** les ouvertures de débordement (4) supplémentaires sont ménagées dans la zone entourant l'ouverture de débordement (3) centrale de manière annulaire.

12. Bougie d'allumage selon l'une quelconque des revendications 1 à 11, **caractérisée en ce que** la paroi (2) de la préchambre entoure l'électrode centrale (12) et l'électrode de masse (14), de préférence intégralement.

13. Bougie d'allumage selon l'une quelconque des revendications 1 à 12, **caractérisée en ce qu'**au moins deux, de préférence trois ou quatre électrodes centrales (12) orientées en direction de la paroi (2) de la préchambre sont disposées sur le support d'électrodes centrales (11) et un nombre correspondant d'électrodes de masse (14) respectivement en vis-à-vis des électrodes centrales (12) sont disposées sur le support d'électrodes de masse (13).

14. Bougie d'allumage selon l'une quelconque des revendications 1 à 13, **caractérisée en ce que** les électrodes de masse (14) à l'intérieur de la préchambre (1) sont espacées de la surface intérieure (15) de la paroi (2) de la préchambre.

15. Bougie d'allumage selon la revendication 14, **caractérisée en ce que** la distance (23) entre le centre de la surface, orientée vers l'électrode centrale (12), de l'électrode de masse (14) et la surface intérieure (15) de la paroi (2) de la préchambre atteint au moins 15 %, de préférence au moins 20 % du diamètre intérieur (24) de la préchambre (1).

16. Bougie d'allumage selon l'une quelconque des revendications 1 à 15, **caractérisée en ce qu'**un volume partiel (16) de la préchambre (1) sur la face, orientée vers une chambre de combustion, du centre (17) du parcours d'allumage entre l'électrode centrale (12) et l'électrode de masse (14), vu en coupe longitudinale à travers la préchambre, atteint entre 30 % et 55 %, de préférence entre 35 % et 45 % du volume total de la préchambre (1).

17. Bougie d'allumage selon l'une quelconque des revendications 1 à 16, **caractérisée en ce que** la surface totale des ouvertures de débordement (3, 4) atteint au maximum 10%, de préférence au maximum 5 % de la surface extérieure fermée de la paroi (2) de la préchambre, calculé à partir d'une limite d'extension (18) de la préchambre (1) la plus éloignée, vu à partir de la face de la chambre de combustion de la préchambre (1).

18. Bougie d'allumage selon l'une quelconque des revendications 1 à 17, **caractérisée en ce que** la paroi (2) de la préchambre est reliée fixement ou réalisée d'une seule pièce avec le reste de la bougie d'allumage, par exemple par soudage.

19. Bougie d'allumage selon l'une quelconque des revendications précédentes 1 à 18, **caractérisée en ce que** la paroi (2) de la préchambre est fixée de façon détachable, au moins en partie, de préférence intégralement, le cas échéant avec le support d'électrode de masse (13), sur le reste de la bougie d'allumage.
